# EUROPEAN PATENT APPLICATION

(11) **EP 0 913 812 A1**
(43) Date of publication of application: **06.05.1999**
(21) Application number: 98119558.9
(22) Date of filing: 16.10.1998
(51) Int. Cl.: G11B 5/53

(54) **Thin-film technology for a head drum**

(30) Priority: 29.10.1997 DE 19747729
(71) Applicant: DEUTSCHE THOMSON-BRANDT GMBH, 78048 Villingen-Schwenningen (DE)
(72) Inventor: Kaaden, Jürgen, 78052 Villingen-Schwenningen (DE); Oldermann, Klaus, 78052 Villingen-Schwenningen (DE); Wursthorn, Edgar, 78073 Bad Dürrheim (DE)
(74) Representative: Rossmanith, Manfred

(57) **Abstract**

To increase the writing density on recording media in tape form, particularly for recording digital signals, the track widths are made smaller and smaller. Head arrangements which are suitable for this can also be produced, as is known, in a relatively complex manner using thin-film technology.

In order to specify a head drum which has rotating heads for recording and/or playback of information using a recording medium in tape form, and which can be produced cheaply, the application proposes producing the heads (3,4;25,26) and the rotating part of the rotary transformer for signal transfer (6) on a common substrate (13) using thin-film technology.

## Description

The invention is based on the production of a head drum for recording and/or playback of signals using a recording medium in tape form, in accordance with the precharacterizing clause of Claim 1.

To increase the writing density for recorders which record digital data, stationary write/read head arrangements produced using thin-film technology are now known which allow track widths of less than 10 µm. Thus, for example, EP 0 519 182 B1 discloses write/read head arrangements of this type which are produced on a substrate in one manufacturing process. The substrate used here is ferrite or aluminium oxide ceramic, and in each case one write/read head for digital signals and one write/read head, called a head in the following text, for analogue signals are arranged on the same substrate. The two heads can each have a number of channels and are able to record and play back using the longitudinal-track process.

The object of the invention is to specify a head drum for signal recording and/or playback using a recording medium in tape form, which head drum can be produced cheaply and with a high yield produced using thin-film technology.

This object is achieved by the features of Claim 1. Advantageous developments and applications are specified in the subclaims.

The invention is based on the concept of producing the respective heads of a head drum for signal recording and/or playback using a recording medium in tape form together with the rotating part of a signal transformer on the basis of a substrate using thin-film technology.

The advantage of the invention is that such arrangements comprising the respective heads and the rotating part of a signal transformer, called head arrangements below, can be produced in large numbers using the wafer technology which is known, in particular, from the manufacture of integrated circuits. By selecting the head design or their respective geometrical shape, wafer surfaces which can be obtained using this technology can be put to optimum use.

This technology, which is similarly also suitable for producing large numbers of the stationary part of the rotary transformer using thin-film technology, is known to have the advantage of being able to process a multiplicity of such arrangements at the same time in one production step and, when they have been completed, to separate them using known methods.

With a substrate of a defined height, thin-film technology advantageously enables the heads to be arranged with very high precision, particularly for signal recording and/or playback using the helical-scan process, with a very small track width on the recording medium. The track height between the heads can be selected to be such that the tracks are written without guard bands - i.e. without gaps, so that the recording medium is utilized 100%. In this case, adjacent tracks may be written at different azimuth angles.

The respective heads, which form an annular core, are produced on the substrate, produced using thin-film technology, from magnetically conductive material, as is the rotating part of the rotary transformer, that part of the core which in each case points towards the side of the recording medium and in so doing forms a yoke being shaped to form a head gap, whilst those parts of the core which in each case form the limbs are surrounded by coiled or spiralled windings for the purpose of writing or reading information. The magnetically conductive material of the rotating part of the rotary transformer is shaped to form annular chambers which then have rotary transformer windings, preferably made of copper, produced in them.

When it has been produced, such a head arrangement is then joined, together with a rotary cylinder, to the rotating part of a head drum. Alternatively, with a suitable choice of the substrate thickness, such a head arrangement can also be used on its own as the rotating part of a head drum.

According to a first development of the invention, provision is made for such a head arrangement having the respective heads and the rotating part of a signal transformer to be produced in large numbers using wafer technology on the basis of a substrate produced using thin-film technology.

According to a second development, provision is made for the signal which is to be recorded or played back to be transferred, without the customary transformer, from the stationary part into the rotating part of the head drum, or vice versa in the case of playback, by virtue of the fact that, when recording, the magnetic field produced in the stationary part and extending from the latter into the rotating part is fed on a direct path via magnetically conductive material to the respective heads, which are now designed without coils however. This advantageously facilitates the design further and thus enables production costs to be reduced further.

Furthermore, the invention relates to a head drum for a tape recorder for recording and/or playback of information using a recording medium in tape form. The invention is based on a head drum according to the precharacterizing clause of Claim 10. Such head drums are of complex design.

On this basis, one object of the invention is to improve known head drums. This object is achieved by a head drum having the features of the characterizing part of Claim 10.

The compact arrangement makes it possible to locate heads very closely next to one another on a substrate, with head spacings of less than half of those of head arrangements known per se.

Arrangements having closely adjacent heads also enable the associated data-storage system to be very highly flexible. Thus, for example, data may even be written at half or a third of the normal tape speed. Alternatively, if two pairs of magnetic heads situated opposite one another are used to write simultaneously, the data rate may be increased.

Moreover, the very good crosstorque attenuation which may be achieved with the embodiments according to the invention also allows write and read heads to be arranged closely adjacent to one another, so that reading and writing may advantageously take place at the same time. If thin magnetic barriers are additionally placed between the two heads and between the transformer windings, the crosstorque attenuation may be increased up to 90 dB.

In addition, electronic components such as head amplifiers and head changeover switches may also be integrated on the substrate. In mass production, head drums can thus be produced very cheaply and at the same time have very high precision, since the heads are arranged or produced on a substrate, and this cuts out the need for complex adjustments.

These head drums are used, in particular, in the consumer sector for digital video and digital data-storage systems for computers, as well as in the professional sector for DV-CAM and DVC-PRO.

Finally, the invention relates to a tape recorder for recording and/or playback of information using a recording medium. In this case, it is the object of the invention to reduce the design complexity of such a tape recorder.

This object is achieved by a tape recorder having a head drum which has at least one head produced, using thin-film technology, together with the rotating part of the rotary transformer on the same substrate.

The invention is explained in greater detail below using drawings as examples. In the drawings:
- Fig. 1a: shows a plan view of the rotating part of a head drum according to the first embodiment of a wafer,
- Fig. 1b: shows a sectional illustration of the head drum
- Fig. 1c: shows a sectional illustration of a detail of the rotating part of the head drum with a write/read head and rotary transformer windings,
- Fig. 1d: shows a plan view of the detail;
- Fig. 2a: shows a first arrangement, according to the first development, having the rotating part of a rotary transformer together with two write/read heads,
- Fig. 2b: shows a number of copies of the first arrangement on a substrate,
- Fig. 2c: shows the rotating part of a head drum;
- Fig. 3a: shows a second arrangement, according to the first development, having the rotating part of a rotary transformer together with two write/read heads,
- Fig. 3b: shows a number of copies of the second arrangement on a substrate,
- Fig. 3c: shows the rotating part of a head drum;
- Fig. 4a: shows a plan view of the rotating part of the head drum shown in Figs. 2a - 2c or Figs. 3a - 3c with the arrangement of the rotating part of the rotary transformer and two write/read heads,
- Fig. 4b: shows a sectional illustration of the head drum shown in Fig. 4a;
- Fig. 5a: shows a perspective illustration of a head drum with the arrangement of a rotary transformer and write/read heads, without coils, according to the second development,
- Fig. 5b: shows a perspective illustration of a detail of the head drum shown in Fig. 5a with a write/read head, without a coil, and the rotary transformer.

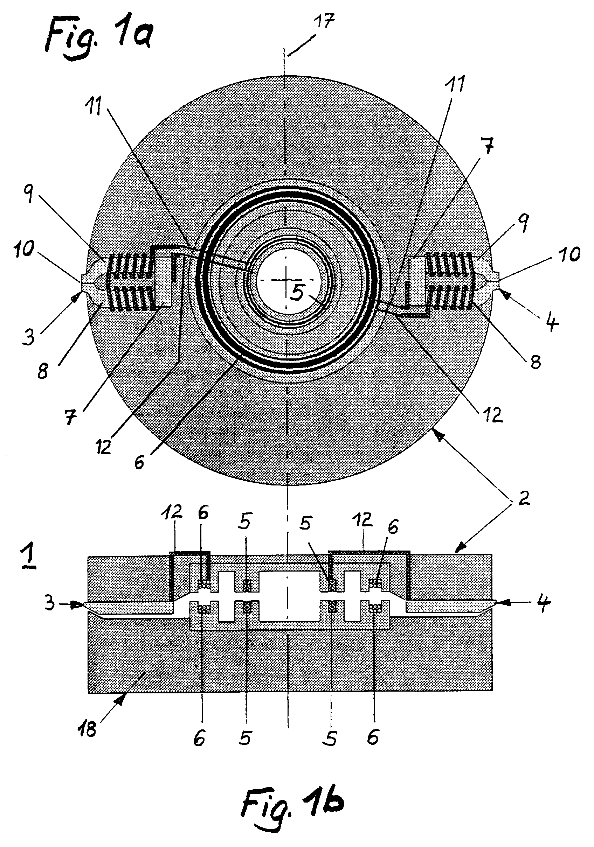

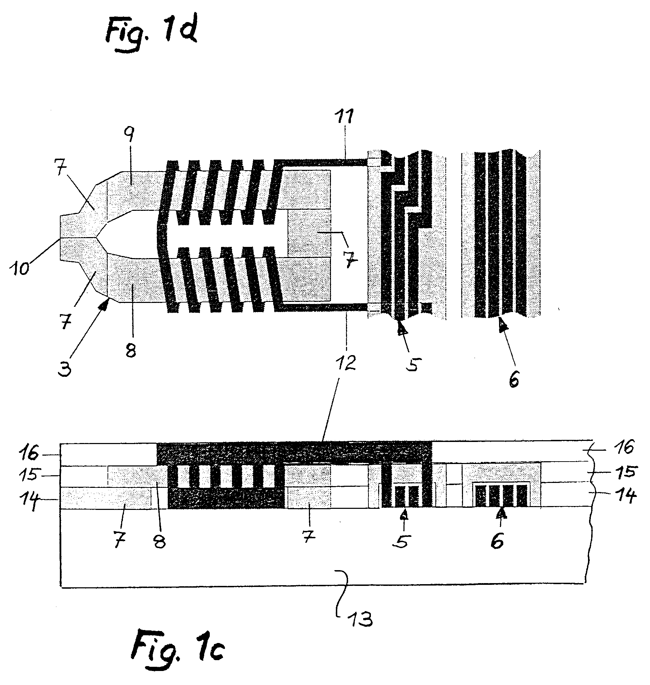

It should be pointed out initially that, in Figures 1a-5b, identical or equivalent parts are provided with the same reference numerals.

Figs. 1a-1b are schematic illustrations of a head drum 1. Fig. 1a shows a plan view of the rotating part 2 of the head drum 1, the said rotating part 2 holding, by way of example, two write/read heads 3, 4, called heads 3, 4 below, for reading and writing information using a recording medium (not shown), and the rotating part of a rotary transformer having windings 5, 6, whilst Fig. 1b is a sectional illustration of the head drum 1. Fig. 1c shows an enlarged sectional illustration of one of the two heads 3, 4 having the rotary transformer windings 5, 6. Fig. 1d shows a plan view of the head which is shown enlarged in Fig. 1c.

The heads 3, 4 and the rotating part of the rotary transformer having the windings 5, 6 are produced, using thin-film technology, in layers on a substrate 13 (Fig. 1c) which is preferably made of silicon dioxide (SiO₂). The heads 3, 4 each contain a yoke 7 having two limbs 8, 9 which are made of magnetically conductive material and are designed in such a way that they form a head gap 10 with an oblique asimuth angle. The limbs 8, 9 are each surrounded by a coiled axial winding stop. The axial windings together form a head structure which is connected to a write/read amplifier (not shown) via electrical lines 11, 12.

The heads 3, 4 and the rotating part of the rotary transformer having the windings 5, 6 are produced in a number of successive process steps in a process which will be explained in greater detail using head production: thus, for example, using thin-film technology, the substrate 13 receives, in a manner known per se, a first film layer 14 of electrically conductive material, e.g. copper (Cu), for developing the head winding arranged on the limbs 8, 9, and of magnetically conductive material which may be Ni-Fe, for example, and serves to form the yokes 7 and the head gap 10 as well as the rotating part of the rotary transformer, which has a U-shaped profile for the arrangement of the windings 5, 6. This is combined with correspondingly supplementing this film layer 14 by adding SiO₂ to it as a magnetically and electrically insulating material, the head gap 10, which may be produced, for example, in a separate production step using photo-etching processes, also being filled up with SiO₂. A second film layer 15 of further electrically conductive material for further developing the head winding, and of magnetically conductive material for forming the limbs 8, 9 is then applied, combined with correspondingly supplementing this film layer 15 by correspondingly applying further SiO₂. Finally, a third film layer 16 of further electrically conductive material is then applied to complete the head winding and its electrical connection to one of the windings 5, 6 of the rotating part of the rotary transformer by means of lines 11, 12, combined with correspondingly supplementing this film layer 16 by applying SiO₂. A final covering of a passivation layer (not shown), e.g. made of SiO₂, completes the production process.

A highly permeable magnetic film made of FeAlSi or CoZr is also suitable as the magnetically conductive material.

Together with the heads 3, 4, the respective rotating part of the rotary transformer having the windings 5, 6 is also produced in this way, the windings 5, 6 being embedded in U-shaped profiles which are produced concentrically with respect to the rotational axis 17 of the head drum 1 during the production process described above by corresponding application of magnetically conductive material to the substrate 13. In addition, the respective stationary part 18 of the rotary transformer having the windings 5, 6 can also be produced in this way.

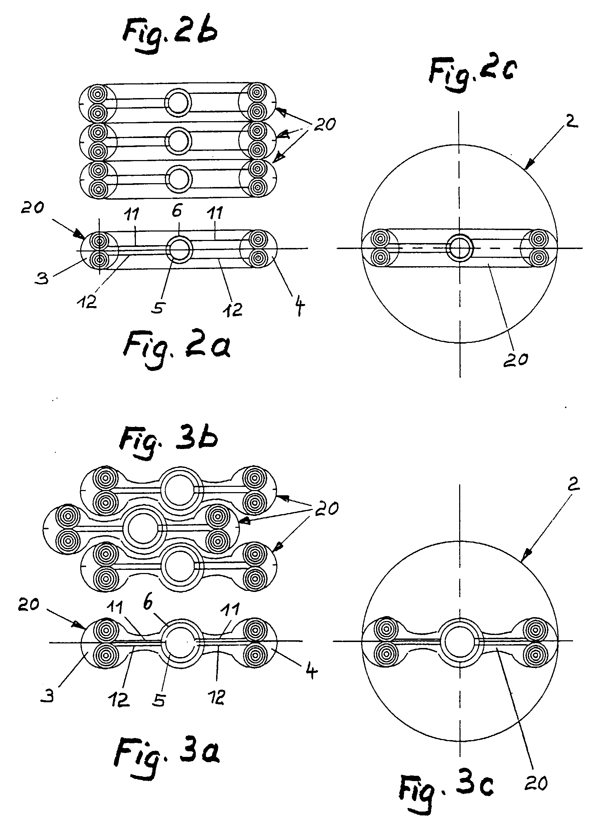

Furthermore, in this way, as shown in Figs. 2a-2c and Figs. 3a-3c according to a first development, the stationary part of the rotary transformer and such arrangements having the respective heads 3, 4 and the rotating part of a rotary transformer can be produced in large numbers by using the wafer technology which is known, in particular, from the manufacture of integrated circuits.

Figs. 2a-2c and Figs. 3a-3c illustrate the principle of production according to the invention using wafer technology by means of in each case two strip-like arrangements 20, called head arrangements 20 below, having heads 3, 4 of the type mentioned and having the rotating part of a rotary transformer, Fig. 2a showing a schematic plan view of a first and Fig. 3a showing a schematic plan view of a second head arrangement 20 separated from a substrate 13 in each case, whilst Figs. 2b and 3b show, by way of example, the respective arrangement on a wafer of in each case a group of such schematically illustrated head arrangements 20. Figs. 2c and 3c each show a schematic plan view of the rotating part 2 of a head drum 1 having such a head arrangement 20.

The heads 3, 4 of the respective head arrangement 20 are illustrated by a pair of concentric rings which is intended to symbolize a winding arranged on the two limbs of the respective head 3, 4 for writing and/or reading using the recording medium (not shown). The winding of each head 3; 4 is electrically connected via lines 11, 12 to a winding 5; 6 forming the respective rotating part of a rotary transformer. This rotary transformer part and the lines 11, 12 are produced, as are the heads 2, 3, on the respective head arrangement 20 produced using thin-film technology.

Each of these head arrangements 20 is then - like the respective rotating part of a rotary transformer and/or the heads 3, 4 shown in Figs. 1a-1e - joined together with or arranged on a rotary cylinder to form the rotating part 2 of a head drum 1.

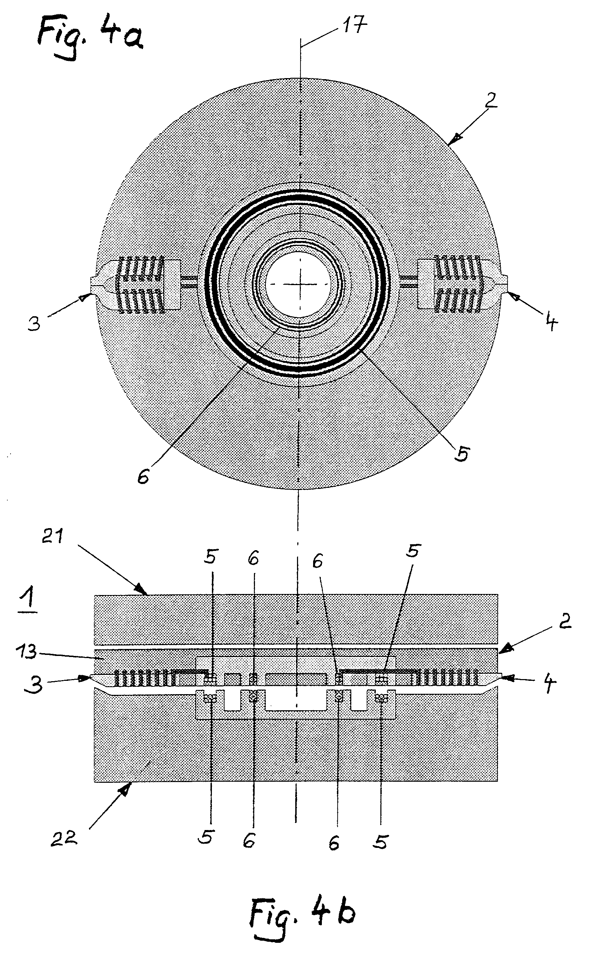

On the basis of shape substrate material and substrate thickness, this technology also permits, as shown below in Figs. 4a-4b, such head arrangements 20 to be produced as a round disc and to be used as the rotating part 2 of a head drum 1, without the use of a rotary cylinder, once they have been finished and separated from the wafer. On account of the substrate surface which is required, head arrangements 20 shaped in this manner are especially suitable for appliances, such as camcorders, which have a relatively small head drum.

Figs. 4a-4b show a head drum 1 with such a head arrangement. Fig. 4a shows a schematic plan view of the rotating part 2 of the head drum 1, the said rotating part 2 being formed solely by the head arrangement in this exemplary embodiment. Fig. 4b shows the head drum 1 schematically in a sectional illustration.

This head arrangement has the shape of a round disc and has the rotating part of a rotary transformer in addition to two heads 3, 4. As shown in this exemplary embodiment, it may be arranged so as to rotate between a stationary lower cylinder 22 and a stationary upper cylinder 21, thus forming the head drum 1 together with these cylinders 21, 22.

As in the case of the head drum 1 shown in Figs. 1a-1d, the rotating part and the stationary part of the rotary transformer in this case are also made of magnetically conductive material having U-shaped profiles which are arranged concentrically with respect to the rotational axis 17 of the head drum 1 and have the windings 5, 6 of the rotary transformer embedded in them.

In order to replicate these head arrangements, the heads 3, 4 are produced, in this exemplary embodiment as well and in the exemplary embodiment shown in Figs. 5a-5b and described below, on a substrate 13 using thin-film technology. In each case together with the rotating part of the rotary transformer.

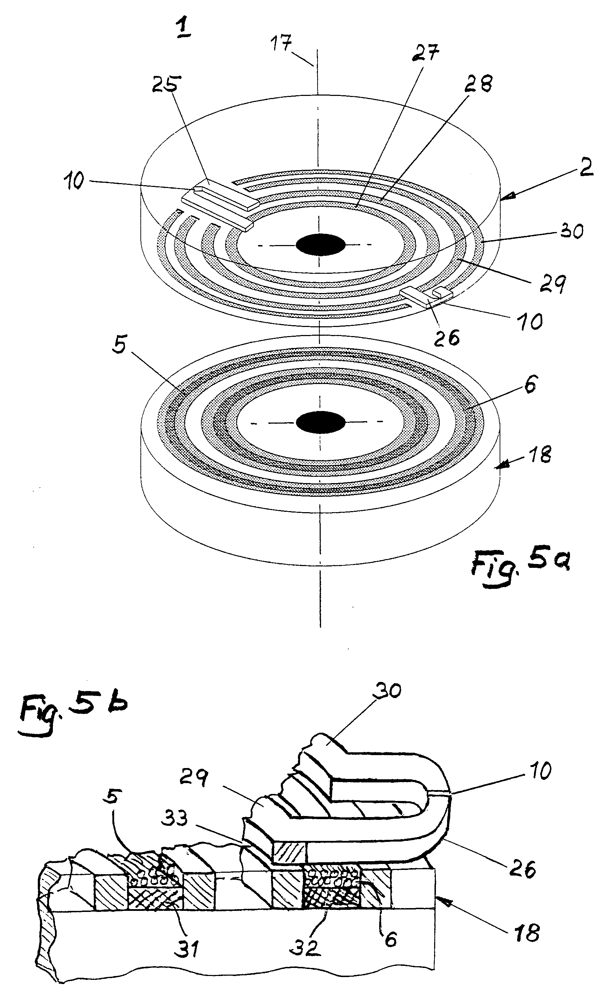

Fig. 5a shows a perspective view of a head drum 1 comprising a rotating part 2 and a stationary part 18. According to a second development of the invention, it has heads 25, 26 without coils. Fig. 5b shows an enlarged perspective illustration of a detail of the head drum 1 having one of the heads 25, 26 without coils and having a rotary transformer.

The rotating part of the rotary transformer also does not have a coil and is formed by annular transformer rings 27, 28; 29, 30 which are arranged concentrically with respect to the rotational axis 17 of the head drum 1 and which have transfer elements situated opposite them, which have windings 5, 6 and are appropriately associated with the stationary part of the rotary transformer. The heads 25; 26 and the respective mutually associated transformer rings 27, 28; 29, 30 are magnetically connected to one another and are made solely of magnetically conductive material which is applied to a substrate, preferably made of SiO₂, using thin-film technology. In this case, the transformer rings 28; 29, 30 - called thin-film transformer rings 27, 28; 29, 30 below - are designed so that they are interrupted in such a manner that, on the one hand, a magnetic return path is possible only via the respective head 25; 26 and, on the other hand, cross talk is prevented. In this embodiment, the thin-film transformer rings 27, 28; 29, 30 and heads 25; 26 are situated in one plane. In another embodiment, the heads 25; 26 may alternatively be arranged in a higher plane or a different film layer.

The stationary part of the rotary transformer has annular arrangements having U-shaped profiles, in which the windings 5, 6 are embedded. These profiles are produced by applying magnetically conductive and magneto-resistive material to a substrate, the said materials being applied in such a manner that the central region of the respective profile is made of magneto-resistive material, whilst the lateral regions of the respective profile are made of magnetically conductive material. According to a development of this exemplary embodiment, the magneto-resistive material is used to form magneto-resistive elements (MR) 31, 32 for playback operation of a tape recorder. As is known, magneto-resistive heads for reading so-called hard discs are also produced from such material, a head made from this material being required to receive a power supply.

The windings 5, 6, which - as already described in the exemplary embodiment shown in Figs. 1a-1d - can also be produced here using thin-film technology, are provided for the respective conversion of an electrical signal into a corresponding magnetic flux which, in record mode, is transferred to the rotating part of the rotary transformer via the air gap 33 forming a spacing, by virtue of the fact that the said rotating part enters and emerges from the thin-film transformer rings 27, 28; 29, 30 and in so doing passes through the narrow area of the head gap 10 of the respective head 25; 26, so that a recording medium (not shown) situated in front of its is overwritten in a known manner.

In playback mode, on the other hand, the magnetic flux excited in the respective head gap 10 is converted into an electrical read signal by means of the magneto-resistive elements 31, 32 and is fed to a playback amplifier (e.g. of the type VTC VM6122), which is not shown, for further processing. This amplifier also supplies the current through the respective magneto-resistive element 31, 32, generally 10-15 mA.

Using so-called multilayer technology, the magneto-resistive elements 31, 32 may also be produced with a number of film layers as so-called GMRs (Giant Magneto-Resistive Elements). Depending on the number of layers, these elements increase the output voltage supplied by single-layer magneto-resistive elements by a factor of 3-10.

For operating situations where writing and reading are alternated quickly, overdriving of the read amplifier can advantageously be prevented by reducing the respective current supply for the magneto-resistive elements 31, 32. Alternatively, the gain factor of the read amplifier can also be appropriately reduced.

In order to use the magneto-resistive elements 31, 32 to convert the magnetic flux excited in the respective head gap 10 into a corresponding electrical read signal, the inductive part of the rotary transformer having the windings 5, 6 may alternatively be used. In this case, operation does not differ from that of a conventional tape recorder, except for the fact that conversion into electrical signals on the rotating side of the head drum 1 does not take place.

In this embodiment, too, both the rotating part 2 and the stationary part 18 and hence a head drum 1 can be produced almost completely on one substrate using thin-film technology.

Although the manufacture of the heads 3, 4 and rotary transformers has been described using thin-film technology, production steps characterized, for example, by photo-etching and vapour deposition or the like may also be used or added when manufacturing is carried out using thin-film technology.

## Claims

1. Method manufacturing a head drum (1) having a rotating part (2) and a stationary part (18), having at least one head (3, 4; 25, 26) for recording and/or playback of information, and having a rotary transformer, comprising a rotating part and a stationary part, for signal transfer, characterized in that the heads (3, 4; 25, 26) and the rotating part of the rotary transformer are produced on the same substrate (13) using in-film technology.

2. Method according to Claim 1, characterized in that the head (3, 4; 25, 26) and the rotating part of the rotary transformer are produced in one production process.

3. Method according to Claim 1 and/or 2, characterized in that the head (3, 4; 25, 26) produced using thin-film technology and the rotating part of the rotary transformer form a strip-like head arrangement (20) which can be produced in large numbers on the basis of a substrate (13) using wafer technology.

4. Method according to Claim 1 and/or 2, characterized in that the head (3, 4; 25, 26) produced using thin-film technology and the rotating part of the rotary transformer form a head arrangement (20) in the form of a round disc which can be produced in large numbers on the basis of a substrate (13) using wafer technology.

5. Method according to Claim 3 or 4, characterized in that, in order to form the respective rotating part (2) of the head drum (1), the head arrangements (20) are arranged in each case on a rotary cylinder when they have been produced and separated from the wafer.

6. Method according to Claim 4, characterized in that the head drum (1) is formed solely with one head arrangement (20) designed as a round disc.

7. Method according to one or more of Claims 1 - 6, characterized in that the head (25, 26) and the rotating part of the rotary transformer are designed without a coil, the head (25, 26) and the rotating part of the transformer being produced from the same magnetically conductive material.

8. Method according to Claim 7, characterized in that the magnetically conductive material of the rotating part of the rotary transformer is arranged in a ring on the substrate (13) in such a manner that interrupted transformer rings (27, 28; 29, 30) having transfer elements (which are correspondingly annular and have windings (5, 6)) situated opposite them in the stationary part of the rotary transformer are formed such that, on the one hand, a magnetic return path is possible only via the head (25, 26) and, on the other hand, cross talk is prevented.

9. Method according to Claim 8, characterized in that the transfer means in the stationary part of the rotary transformer is produced with a magneto-resistive element (31, 32) which is provided for converting the magnetic flux excited in the head gap (10) into an electrical read signal.

10. Head drum with a rotating part (2) and a stationary part (18) having at least one head (3, 4; 25, 26) for recording and/or playback of information using a recording medium in tape form and having a rotary transformer, comprising a rotating part and a stationary part, for signal transfer, characterized in that the heads (3, 4; 25, 26) and the rotating part of the rotary transformer are produced on the same substrate (13) using thin-film technology.

11. Head drum according to Claim 1, characterized in that the stationary part (18) of the rotary transformer is produced on a substrate (13) using thin-film technology.

12. Tape recorder characterized in that it has a head drum (1) according to Claim 10 and/or Claim 11.
